(19) Europäisches Patentamt / European Patent Office / Office européen des brevets

(11) **EP 4 779 530 A1**

(12) **EUROPEAN PATENT APPLICATION**
published in accordance with Art. 153(4) EPC

(43) Date of publication:
**22.07.2026 Bulletin 2026/30**

(21) Application number: **23952291.5**

(22) Date of filing: **15.09.2023**

(51) International Patent Classification (IPC):
**G06N 10/40** $^{(2022.01)}$

(52) Cooperative Patent Classification (CPC):
**G06N 10/40**

(86) International application number:
**PCT/JP2023/033716**

(87) International publication number:
**WO 2025/057402 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **ISHII, Masatoshi**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **QUANTUM CIRCUIT CONVERSION PROGRAM, QUANTUM CIRCUIT CONVERSION METHOD, AND INFORMATION PROCESSING DEVICE**

(57)     The number of gate operations for an arbitrary rotation is reduced.

A quantum circuit (2) includes a rotation gate (2a, 2b) representing a gate operation for an arbitrary rotation that rotates a state of a qubit to be operated about an axis different from the coordinate axes. An information processing apparatus (10) transforms the rotation gate (2a, 2b) for the arbitrary rotation into a sub-circuit (4a, 4b) that performs a rotation gate operation in which a rotation about a Z-axis is insufficient by a predetermined angle relative to the arbitrary rotation. The information processing apparatus (10) changes, in the quantum circuit (2), a gate operation of one or a plurality of quantum gates following the rotation gate (2a, 2b), which acts on the qubit to be operated, to a gate operation that performs an additional rotation about the Z-axis by the predetermined angle.

FIG. 1

## Description

Technical Field

The embodiments discussed herein relate to a quantum circuit transformation program, a quantum circuit transformation method, and an information processing apparatus.

Background Art

Currently available quantum computers are of a type called noisy intermediate-scale quantum (NISQ) computers, which use superconducting or trapped-ion qubits. These quantum devices have an error rate of approximately 1% and have approximately 10 to 1000 qubits. Such small-scale quantum computers are not able to completely correct errors. Therefore, when quantum computation is performed on a quantum computer, it is important to perform the quantum computation using quantum circuits configured to reduce errors as much as possible.

A quantum computer implements single-qubit gates and two-qubit gates as quantum gates for manipulating qubits. These quantum gates are referred to as native gates. The types of two-qubit gates supported as native gates depend on the type of quantum device employed in the quantum computer.

As techniques related to creation of quantum circuits, for example, a shortened quantum circuit has been proposed which is implemented on an NISQ device and is able to obtain computation results similar to those of a quantum algorithm that involves a large number of quantum gate operations. In addition, a quantum computer has been proposed in which the total number of gate operations is reduced compared to the number of gate operations typically performed in the case where the imaginary time evolution method is used. Other various methods for optimizing quantum circuit design have also been proposed.

Citation List

Patent Literature

PTL1: Japanese Laid-open Patent Publication No. 2022-180189
PTL2: International Publication Pamphlet No. WO 2021/177031
PTL3: U.S. Patent Application Publication No. 2020/0074035
PTL4: U.S. Patent Application Publication No. 2020/0104747

Summary of Invention

Technical Problem

Gate operations for a single qubit include an arbitrary-rotation gate operation that rotates a qubit in an arbitrary direction by an arbitrary angle. The arbitrary-rotation gate operation is implemented by decomposing it into native gates. However, if the number of gate operations after the decomposition into native gates is large, the execution time of the quantum circuit increases. If the execution time of the quantum circuit is long, the execution time may exceed the coherence time, thereby making it difficult to obtain correct results. Therefore, it is desirable to implement an arbitrary-rotation gate operation with as few gate operations as possible.

In one aspect, one object of the present disclosure is to reduce the number of gate operations for an arbitrary rotation.

Solution to Problem

In one aspect, a quantum circuit transformation program is provided that causes a computer to perform the following process.

The computer transforms a first rotation gate, which is included in a quantum circuit and represents a gate operation for an arbitrary rotation that rotates a state of a qubit to be operated about an axis different from coordinate axes, into a sub-circuit that performs a rotation gate operation in which a rotation about a Z-axis is insufficient by a predetermined angle relative to the arbitrary rotation. Then, the computer changes, in the quantum circuit, a gate operation of one or a plurality of quantum gates following the first rotation gate, which acts on the qubit to be operated, to a gate operation that performs an additional rotation about the Z-axis by the predetermined angle.

Advantageous Effects of Invention

According to one aspect, it is possible to reduce the number of gate operations for an arbitrary rotation.
The foregoing and other objects, features, and advantages of the present disclosure will become apparent from the following description of preferred embodiments, when read together with the accompany drawings.

Brief Description of Drawings

[FIG. 1] FIG. 1 illustrates an example of a quantum circuit transformation method according to a first embodiment.
[FIG. 2] FIG. 2 illustrates an example of a configuration of a quantum computing system.
[FIG. 3] FIG. 3 illustrates an example of a hardware configuration of a quantum computer device.
[FIG. 4] FIG. 4 illustrates an example of a hardware configuration of a classical computer device.
[FIG. 5] FIG. 5 illustrates examples of quantum circuits including arbitrary-rotation gate operations.
[FIG. 6] FIG. 6 illustrates an example of a gate operation decomposition method in order to perform an arbitrary rotation with a small number of gate operations.
[FIG. 7] FIG. 7 illustrates an example of functions of the classical computer device.
[FIG. 8] FIG. 8 is a flowchart illustrating an example procedure for quantum computation.
[FIG. 9] FIG. 9 is a flowchart (1/2) illustrating an example procedure for a transformation process into native gates.
[FIG. 10] FIG. 10 illustrates an example of a transformation from ZXZXZ circuits to native gates of a trapped-ion quantum device.
[FIG. 11] FIG. 11 illustrates an example of a correspondence between an MS gate and an $R_{XX}$ gate.
[FIG. 12] FIG. 12 illustrates an example of a transformation process for a sub-circuit including an $R_{XX}$ gate.
[FIG. 13] FIG. 13 illustrates an example of a transformation process for a sub-circuit including an $R_{XX}$ gate.
[FIG. 14] FIG. 14 is a first diagram illustrating an example of a transformation of quantum gates for arbitrary rotations into native gates.
[FIG. 15] FIG. 15 is a second diagram illustrating an example of a transformation of quantum gates for arbitrary rotations into native gates.
[FIG. 16] FIG. 16 illustrates an example of a transformation of the last gate operations for arbitrary rotations into native gates.
[FIG. 17] FIG. 17 is a third diagram illustrating an example of a transformation of quantum gates for arbitrary rotations into native gates.
[FIG. 18] FIG. 18 is a flowchart (2/2) illustrating the example procedure for the transformation process into native gates.

Description of Embodiments

Hereinafter, embodiments will be described with reference to the drawings. A plurality of embodiments may be combined unless they exclude each other.

[First Embodiment]

A first embodiment relates to a quantum circuit transformation method capable of reducing the number of quantum gates used for an arbitrary-rotation gate operation.

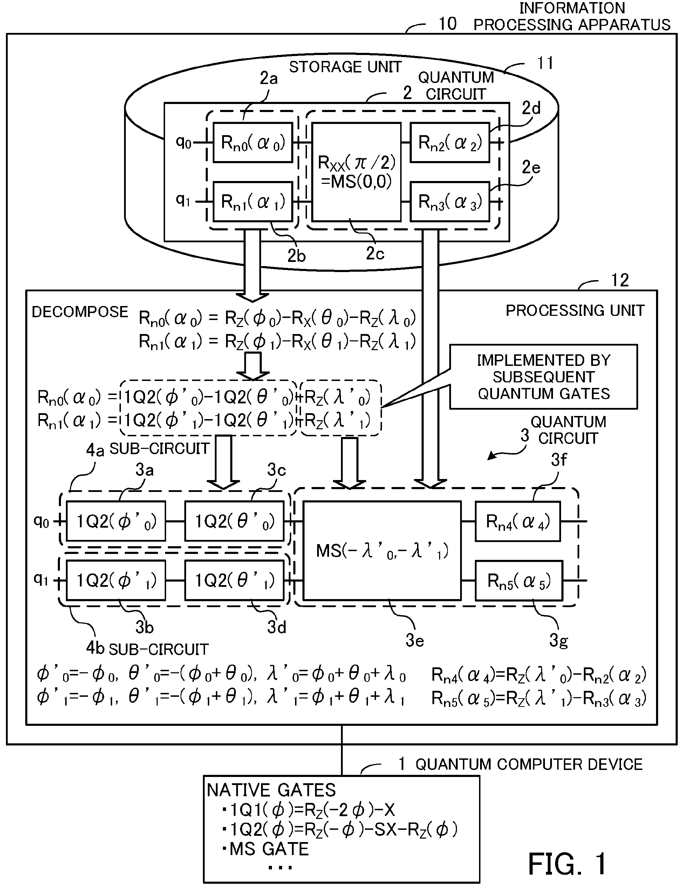

FIG. 1 illustrates an example of the quantum circuit transformation method according to the first embodiment. FIG. 1 illustrates an information processing apparatus 10 that implements the quantum circuit transformation method. The information processing apparatus 10 is able to implement the quantum circuit transformation method by executing, for example, a quantum circuit transformation program.
The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.
The storage unit 11 stores a quantum circuit 2 representing a procedure for quantum computation using a quantum computer device 1. The quantum circuit 2 includes rotation gates 2a and 2b (first rotation gates) representing arbitrary-rotation gate operations that each rotate the state of a qubit to be operated about an axis different from the coordinate axes. An axis of rotation different from the coordinate axes is an arbitrary rotation axis other than the X-axis, the Y-axis, and the Z-axis of the Bloch sphere. An arbitrary rotation axis is represented by, for example, a three-dimensional axis vector.

For example, in the quantum circuit 2, the rotation gate 2a with a rotation angle "$\alpha_0$" about a rotation axis "$n_0$" ($n_0$ is a three-dimensional axis vector) is arranged for a first qubit "$q_0$". In the quantum circuit 2, the rotation gate 2b with a rotation angle "$\alpha_1$" about a rotation axis "$n_1$" ($n_1$ is a three-dimensional axis vector) is arranged for a second qubit "$q_1$".

The rotation gates 2a and 2b for the two qubits "$q_0$ and $q_1$" are followed by a Mølmer-Sørenson (MS) gate 2c having angle parameters (0, 0). The gate operation of the MS gate 2c with the angle parameters (0, 0) is the same as that of an $R_{XX}(\pi/2)$ gate. For the qubit "$q_0$", a rotation gate 2d (sixth rotation gate) for an arbitrary rotation is arranged next to the MS gate 2c. For the qubit "$q_1$", a rotation gate 2e (sixth rotation gate) for an arbitrary rotation is arranged next to the MS gate 2c.

The processing unit 12 transforms the quantum circuit 2 into a quantum circuit 3 using native gates of the quantum computer device 1. For example, assume that single-qubit native gates of the quantum computer device 1 are a "1Q1 gate" and a "1Q2 gate".

The 1Q1 gate is a rotation gate that changes the state of a qubit, in a single gate operation, to a state resulting from a rotation about the Z-axis and a rotation about the X-axis. The state after the change is, for example, a state obtained by rotating the state of the qubit about the Z-axis in a direction opposite to a specified rotation direction by twice the angle specified by an angle parameter and then rotating the state of the qubit by 180° about the X-axis. A gate operation for a 180° rotation about the X-axis is the same as the gate operation of an X gate.

The 1Q2 gate is a rotation gate that changes the state of a qubit, in a single gate operation, to a state resulting from a rotation about the Z-axis, a rotation about the X-axis, and a rotation about the Z-axis. The state after the change is, for example, a state obtained by rotating the state of the qubit about the Z-axis in a direction opposite to a specified rotation direction by the angle specified by an angle parameter, rotating the state by 90° about the X-axis, and rotating the state about the Z-axis by a specified angle in a specified rotation direction. A gate operation for a 90° rotation about the X-axis is the same as the gate operation of an SX gate. A two-qubit native gate of the quantum computer device 1 is, for example, an MS gate.

For example, the processing unit 12 transforms the rotation gates 2a and 2b for the arbitrary rotations, which are included in the quantum circuit 2 and each rotate the state of a qubit to be operated about an axis different from the coordinate axes, into sub-circuits 4a and 4b, respectively. Each of the sub-circuits 4a and 4b is a quantum circuit configured to perform a rotation operation in which a rotation about the Z-axis is insufficient by a predetermined angle relative to the intended arbitrary rotation of the corresponding rotation gate 2a or 2b.

For example, the rotation gate 2a for the qubit "$q_0$" is transformed into the sub-circuit 4a including a rotation gate 3a (second rotation gate) and a rotation gate 3c (third rotation gate). The rotation gate 2b for the qubit "$q_1$" is transformed into the sub-circuit 4b including a rotation gate 3b (second rotation gate) and a rotation gate 3d (third rotation gate).

The rotation gates 3a and 3b and the rotation gates 3c and 3d are all 1Q2 gates. In this case, an arbitrary rotation "$R_{n0}(\alpha_0)$" for the qubit "$q_0$" is expressed as "$R_{n0}(\alpha_0) = 1Q2(\varphi'_0)\text{-}1Q2(\theta'_0)\text{-}R_Z(\lambda'_0)$". The rotation angle parameters "$\varphi'_0, \theta'_0, \lambda'_0$" are all real numbers. An arbitrary rotation "$R_{n1}(\alpha_1)$" for the qubit "$q_1$" is expressed as "$R_{n1}(\alpha_1) = 1Q2(\varphi'_0)\text{-}1Q2(\theta'_0)\text{-}R_Z(\lambda'_0)$". The rotation angle parameters "$\varphi'_1, \theta'_1, \lambda'_1$" are all real numbers. Consecutive quantum gates connected by "-" indicate that the gate operations of the connected quantum gates are executed in order from the left.

In this case, "$\lambda'_0$" and "$\lambda'_1$" each indicate a predetermined angle by which a rotation of a corresponding qubit is insufficient about the Z-axis after the corresponding sub-circuit 4a or 4b is implemented. That is, simply adding the rotation gate 3a and the rotation gate 3c to the quantum circuit 3 results in a rotation of the qubit "$q_0$" about the Z-axis being insufficient by "$\lambda'_0$" relative to the intended arbitrary rotation. Similarly, simply adding the rotation gate 3b and the rotation gate 3d to the quantum circuit 3 results in a rotation of the qubit "$q_1$" about the Z-axis being insufficient by "$\lambda'_1$" relative to the intended arbitrary rotation.

Therefore, in the quantum circuit 2, the processing unit 12 changes gate operations of one or a plurality of quantum gates following the rotation gates 2a and 2b, which act on the qubits to be operated, to gate operations that each implement an additional rotation about the Z-axis by a predetermined angle corresponding to an insufficient angle in the corresponding sub-circuit 4a or 4b obtained after the transformation. That is, the rotation gate operations of "$R_Z(\lambda'_0)$" and "$R_Z(\lambda'_1)$" are implemented by quantum gates following the rotation gates 2a and 2b.

In the example of FIG. 1, in the quantum circuit 2, the MS gate 2c is arranged next to the rotation gates 2a and 2b. In this case, the processing unit 12 adds, to the angle parameters of the MS gate 2c arranged next to the rotation gates 2a and 2b, values obtained by reversing the signs of the predetermined angles. An MS gate 3e with the angle parameters updated is arranged next to the rotation gates 3c and 3d of the quantum circuit 3.

Further, the processing unit 12 adds the predetermined angles to the rotation angles about the Z-axis of the rotation gates 2d and 2e arranged next to the MS gate 2c. Rotation gates 3f and 3g obtained by changing the rotation angles of the rotation gates 2d and 2e are arranged next to the MS gate 3e of the quantum circuit 3.

In this way, the arbitrary rotation of each of the rotation gates 2a and 2b is implemented with two native gates. More specifically, the rotation gates 2a and 2b are transformed into the sub-circuits 4a and 4b each representing a rotation gate operation in which a rotation in the Z-axis direction is insufficient. If an insufficient rotation is permissible in the rotation in the Z-axis direction, the sub-circuits 4a and 4b after the transformation may be simplified as compared with an equivalent circuit that accurately implements the arbitrary rotations. As a result, the number of quantum gates used for the arbitrary-rotation gate operations is reduced.

For example, the arbitrary rotation of the rotation gate 2a may be decomposed into rotations about the coordinate axes. The decomposition (ZX decomposition) of the arbitrary rotation of the rotation gate 2a into a rotation about the Z-axis and a rotation about the X-axis is expressed as "$R_{n0}(\alpha_0) = R_Z(\varphi_0)\text{-}R_x(\theta_0)\text{-}R_Z(\lambda_0)$". "$\varphi_0, \theta_0, \lambda_0$" are real numbers indicating Euler rotation angle parameters. The ZX decomposition of the arbitrary rotation of the rotation gate 2b is expressed as "$R_{n1}(\alpha_1) = R_Z(\varphi_1)\text{-}R_x(\theta_1)\text{-}R_Z(\lambda_1)$". "$\varphi_1, \theta_1, \lambda_1$" are real numbers indicating Euler rotation angle parameters.

In the case where the arbitrary rotations are subjected to the ZX decomposition in this manner, the values of the angle parameters of the rotation gates 3a and 3b and the rotation gates 3c and 3d are determined based on the Euler rotation angle parameters obtained by the decomposition. For example, the value of the angle parameter "$\varphi'_0$" of the rotation gate 3a ($1Q2(\varphi'_0)$) is "$\varphi'_0 = -\varphi_0$". The value of the angle parameter "$\varphi'_1$" of the rotation gate 3b ($1Q2(\varphi'_1)$) is "$\varphi'_1 = -\varphi_1$". The value of the angle parameter "$\theta'_0$" of the rotation gate 3c ($1Q2(\theta'_0)$) is "$\theta'_0 = -(\varphi_0 + \theta_0)$". The value of the angle parameter "$\theta'_1$" of the rotation gate 3d ($1Q2(\theta'_1)$) is "$\theta'_1 = -(\varphi_1 + \theta_1)$".

In this case, the predetermined angle "$\lambda'_0$", by which the rotation of the qubit "$q_0$" about the Z-axis is insufficient, is given by "$\lambda'_0 = \varphi_0 + \theta_0 + \lambda_0$". The predetermined angle "$\lambda'_1$", by which the rotation of the qubit "$q_1$" about the Z-axis is insufficient, is given by "$\lambda'_1 = \varphi_1 + \theta_1 + \lambda_1$".

Values obtained by subtracting the insufficient rotation angles about the Z-axis for the qubit "$q_0$" and the qubit "$q_1$" are the angle parameters ($-\lambda'_0, -\lambda'_1$) of the MS gate 3e. Further, the rotation gate 2d next to the MS gate 2c in the quantum circuit 2 is changed to the rotation gate 3f in the quantum circuit 3. In the case where the gate operation of the rotation gate 2d is "$R_{n2}(\alpha_2)$", the gate operation "$R_{n4}(\alpha_4)$" of the rotation gate 3f is given by "$R_{n4}(\alpha_4) = R_Z(\lambda'_0)\text{-}R_{n2}(\alpha_2)$".

The rotation gate 2e next to the MS gate 2c in the quantum circuit 2 is changed to the gate 3g in the quantum circuit 3. In the case where the gate operation of the rotation gate 2e is "$R_{n3}(\alpha_3)$", the gate operation "$R_{n5}(\alpha_5)$" of the rotation gate 3g is given by "$R_{n5}(\alpha_5) = R_Z(\lambda'_1)\text{-}R_{n3}(\alpha_3)$".

In this way, the rotation operations ($R_Z(\lambda'_0)$, $R_Z(\lambda'_1)$) about the Z-axis, which are insufficient in the rotation operations of the rotation gates 3a and 3b and the rotation gates 3c and 3d, are incorporated into the MS gate 3e and the rotation gates 3f and 3g. In the example of FIG. 1, the rotation gates 3f and 3g are also rotation gates for arbitrary rotations. In the case where other quantum gates such as an MS gate follow the rotation gates 3f and 3g, the rotation gates 3f and 3g may also be transformed into native gates in the same manner as the rotation gates 2a and 2b.

In the example of FIG. 1, quantum gates are arranged following the rotation gates 2a and 2b for the arbitrary rotations, but the rotation gates 2a and 2b for the arbitrary rotations may be the last quantum gates. In this case, the insufficient rotations about the Z-axis, which are caused through the transformation into the rotation gates 3a to 3d, are not able to be incorporated into other quantum gates.

In such a case, the processing unit 12 arranges additional native gates next to the rotation gates 3c and 3d in the sub-circuits 4a and 4b to implement the insufficient rotation operations about the Z-axis. For example, the processing unit 12 adds, next to each of the rotation gates 3c and 3d, a 1Q1 gate (fourth gate) with an angle parameter set to "$-\lambda'/2$" and a 1Q1 gate (fifth gate) with an angle parameter set to "0". The 1Q1 gate with the angle parameter set to "$-\lambda'/2$" changes the state of a qubit, in a single gate operation, to a state resulting from a rotation by $\lambda'$ about the Z-axis and a rotation by 180° about the X-axis. The gate operation of the 1Q1 gate with the angle parameter set to "0" is the same as the gate operation of an X gate.

For example, in the case where the rotation gate 2a for the arbitrary rotation, arranged for the qubit "$q_0$", is the last quantum gate, a 1Q1 gate with an angle parameter set to "$-\lambda'_0/2$" is arranged next to the rotation gate 3c, and then a 1Q1 gate with an angle parameter set to "0" is arranged next to that 1Q1 gate. Similarly, in the case where the rotation gate 2b for the arbitrary rotation, arranged for the qubit "$q_1$", is the last quantum gate, a 1Q1 gate with an angle parameter set to "$-\lambda'_1/2$" is arranged next to the rotation gate 3d, and then a 1Q1 gate with an angle parameter set to "0" is arranged next to that 1Q1 gate.

By doing so, even the last rotation gates for arbitrary rotations in the quantum circuit 2 are also transformable into native gates of the quantum computer device 1.

In the example of FIG. 1, the MS gate 2c is arranged next to the rotation gates 2a and 2b for the arbitrary rotations. However, another rotation gate may be arranged next to each of the first rotation gates 2a and 2b. In this case, in the case where the other rotation gate is decomposed, a first quantum gate obtained by the decomposition is a rotation gate (seventh rotation gate) about the Z-axis. In this case, the processing unit 12 adds, to the rotation angle of each rotation gate that represents a rotation about the Z-axis and that is arranged next to a corresponding one of the rotation gates 2a and 2b for the arbitrary rotations, a predetermined angle corresponding to an insufficient rotation angle about the Z-axis in a corresponding one of the sub-circuits 4a and 4b. As a result, the rotation operations about the Z-axis that are insufficient in the rotation gates 3a to 3d after the transformation are incorporated into the next rotation gates.

The quantum circuit 2 may include a plurality of consecutive single-qubit gates that act on the first qubit. In this case, the processing unit 12 transforms the plurality of consecutive single-qubit gates into one single-qubit gate for an arbitrary rotation. By doing so, it is possible to replace the gate operations of a large number of consecutive rotation gates with, for example, two native gates.

Note that, in the case where the rotation gates 2a and 2b for the arbitrary rotations are transformed into the rotation gates 3a to 3d, which are native gates, the subsequent quantum gates are modified. Therefore, the processing unit 12 identifies rotation gates for arbitrary rotations, in order from the beginning of the quantum circuit 2. Then, each time the processing unit 12 identifies a rotation gate for an arbitrary rotation, the processing unit 12 performs, for the identified rotation gate, a process of transforming the identified rotation gate into a sub-circuit using native gates and a process of changing gate operations of one or a plurality of subsequent quantum gates. In this way, the quantum circuit 3 using native gates are efficiently generated by sequentially performing the transformation process from the beginning of the quantum circuit 2.

[Second Embodiment]

A second embodiment relates to a quantum computer system in which the number of gate operations for an arbitrary rotation on a trapped-ion qubit is reduced.

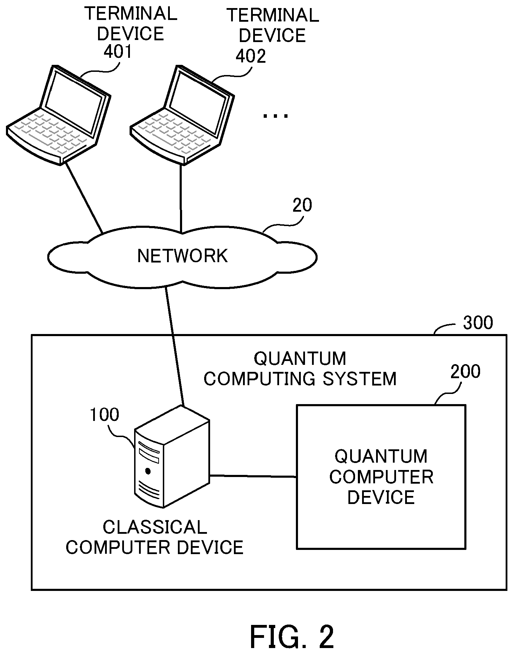

FIG. 2 illustrates an example of a configuration of a quantum computing system. A quantum computing system 300 is, for example, a computer system using a trapped-ion quantum device. The quantum computing system 300 includes a classical computer device 100 and a quantum computer device 200. Terminal devices 401, 402, ... are connected to the classical computer device 100 via a network 20. The terminal devices 401, 402, ... are computers used by users who request quantum computation to be performed by the quantum computing system 300. The classical computer device 100 receives quantum circuits from the terminal devices 401, 402, .... Each quantum circuit represents a sequence of operations on qubits using the arrangement of elements such as gates. A qubit is a bit capable of representing a superposition state of the "0" state and the "1" state.

The classical computer device 100 instructs the quantum computer device 200 to control the qubits in accordance with the quantum circuits received from the terminal devices 401, 402, .... In addition, the classical computer device 100 acquires the measurement result of each qubit from the quantum computer device 200.

The quantum computer device 200 includes a plurality of qubits and a device for manipulating the plurality of qubits. The plurality of qubits included in the quantum computer device 200 are implemented using, for example, a trapped-ion method.

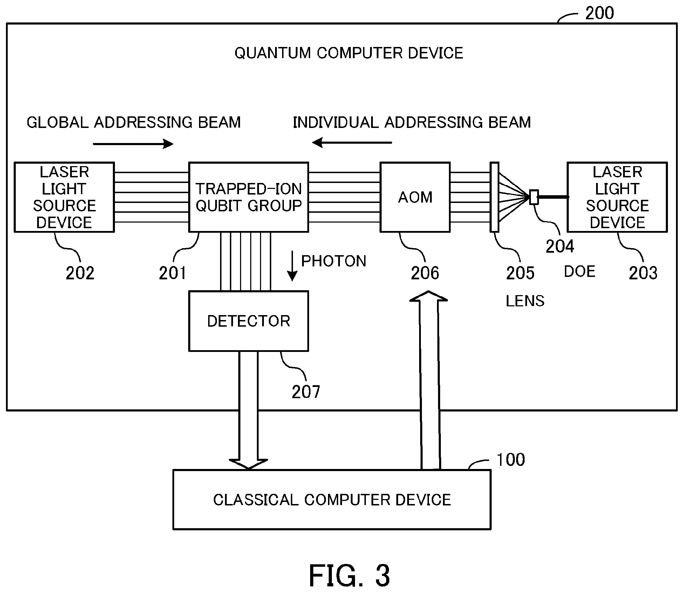

FIG. 3 illustrates an example of a hardware configuration of the quantum computer device. The quantum computer device 200 includes a trapped-ion qubit group 201, a plurality of laser light source devices 202 and 203, a diffractive optical element (DOE) 204, a lens 205, an acousto-optic modulator (AOM) 206, and a detector 207.

The trapped-ion qubit group 201 is a plurality of qubits whose quantum states are represented using trapped ions. One laser light source device 202 outputs a global addressing beam to be emitted to the plurality of qubits. The other laser light source device 203 outputs laser light that becomes individual addressing beams. The laser light output from the laser light source device 203 is incident on the lens 205 via the DOE 204, thereby becoming a plurality of parallel laser lights, which are then incident on the AOM 206. The AOM 206 modulates the frequencies and amplitudes of these laser lights according to gate operations to be performed. The laser lights modulated by the AOM 206 are emitted to the plurality of qubits as the individual addressing beams. By doing so, gate operations are performed on arbitrary qubits. The detector 207 detects photons output from qubits to be measured. The states of the qubits are measured based on the number of photons detected by the detector 207.

The classical computer device 100 controls the above quantum computer device 200 to cause the quantum computer device 200 to perform gate operations by the AOM 206 or to perform state measurement by the detector 207.

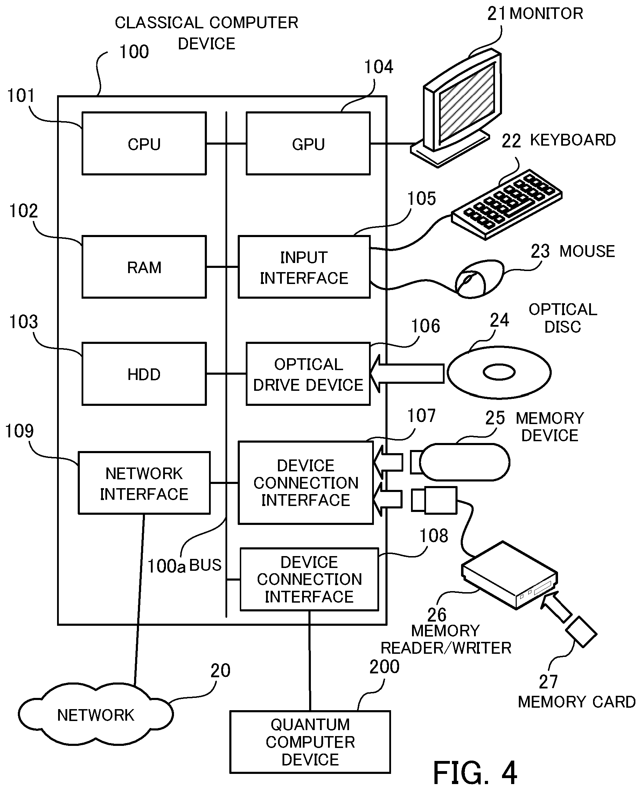

FIG. 4 illustrates an example of a hardware configuration of the classical computer device. The classical computer device 100 is entirely controlled by a central processing unit (CPU) 101. The CPU 101 is a processor that executes program instructions. The CPU 101 may include a plurality of processor cores. The CPU 101 may be a plurality of processors, and may be a micro processing unit (MPU), a digital signal processor (DSP), or the like. At least a part of the functions implemented by the CPU 101 executing the program may be implemented by an electronic circuit such as an application specific integrated circuit (ASIC) or a programmable logic device (PLD). A random access memory (RAM) 102 and a plurality of peripheral devices are connected to the CPU 101 via a bus 100a.

The RAM 102 is a main storage device of the classical computer device 100. The RAM 102 temporarily stores at least part of an operating system (OS) program and application programs to be executed by the CPU 101. The RAM 102 also stores various data used by the CPU 101 during its operation. The classical computer device 100 may include a memory of a type other than the RAM, or may include a plurality of memories.

The peripheral devices connected to the bus 100a include a hard disk drive (HDD) 103, a graphics processing unit (GPU) 104, an input interface 105, an optical drive device 106, device connection interfaces 107 and 108, and a network interface 109.

The HDD 103 is an auxiliary storage device of the classical computer device 100. The HDD 103 magnetically writes and reads data to and from a built-in magnetic disk. The HDD 103 stores OS programs, application programs, and various data. The classical computer device 100 may include another type of auxiliary storage device such as a flash memory or a solid state drive (SSD), or may include a plurality of auxiliary storage devices.

A monitor 21 is connected to the GPU 104. The GPU 104 displays images on the screen of the monitor 21 in accordance with instructions from the CPU 101. Examples of the monitor 21 include a display device using organic electro luminescence (EL) and a liquid crystal display device.

A keyboard 22 and a mouse 23 are connected to the input interface 105. The input interface 105 transmits signals received from the keyboard 22 and the mouse 23 to the CPU 101. The mouse 23 is an example of a pointing device, and other pointing devices may be used. Examples of other pointing devices include a touch panel, a tablet, a touch pad, and a track ball.

The optical drive device 106 uses laser light or the like to read data recorded on an optical disc 24. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R), a CD-rewritable (CD-RW), or the like.

The device connection interface 107 is a communication interface for connecting peripheral devices to the classical computer device 100. For example, a memory device 25 and a memory reader/writer 26 may be connected to the device connection interface 107. The memory device 25 is a storage medium having a function of communicating with the device connection interface 107. The memory reader/writer 26 is a device that writes data to a memory card 27 or reads data from the memory card 27. The memory card 27 is a card-type storage medium.

The device connection interface 108 is a communication interface for connecting the quantum computer device 200 to the classical computer device 100. The classical computer device 100 sends instructions for controlling qubits to the quantum computer device 200 via the device connection interface 108.

The network interface 109 is connected to the network 20. The network interface 109 transmits and receives data to and from other computers or communication devices via the network 20.

With the hardware configuration as described above, the classical computer device 100 is able to implement the processing functions of the second embodiment. The information processing apparatus 10 described in the first embodiment may also be implemented with hardware similar to that of the classical computer device 100 illustrated in FIG. 4. The CPU 101 is an example of the processing unit 12 described in the first embodiment.

The classical computer device 100 implements the processing functions of the second embodiment by executing a program recorded on a computer-readable storage medium, for example. The program describing the processing contents to be executed by the classical computer device 100 may be recorded on various storage media. For example, a program to be executed by the classical computer device 100 may be stored in the HDD 103. The CPU 101 loads at least a part of the program from the HDD 103 into the RAM 102 and executes the program. The program to be executed by the classical computer device 100 may be recorded on a portable storage medium such as the optical disc 24, the memory device 25, or the memory card 27. The program stored in the portable storage medium becomes executable after being installed in the HDD 103 under the control of the CPU 101, for example. Alternatively, the CPU 101 may execute the program while reading the program directly from the portable storage medium.

In the system as described above, the classical computer device 100 acquires, from the terminal devices 401, 402, ..., a quantum circuit in which a procedure of gate operations on qubits for quantum computation is described. The quantum circuit acquired from the terminal devices 401, 402, ... includes gate operations of three or more qubit gates. On the other hand, gate operations the quantum computer device 200 is able to perform are limited to gate operations of single-qubit gates or two-qubit gates.

Therefore, the classical computer device 100 transforms multi-qubit gates that each act on three or more qubits and that are included in the quantum circuit to be computed, into an equivalent circuit using single-qubit gates or two-qubit gates executable by the quantum computer device 200. Then, the classical computer device 100 instructs the quantum computing system 300 to perform quantum computation using the transformed quantum circuit.

The quantum computing system 300 performs quantum computation based on a quantum circuit specified by a user. For example, the classical computer device 100 generates a quantum circuit corresponding to a problem to be solved, and instructs the quantum computer device 200 to execute the quantum circuit.

Some problems to be solved may involve an arbitrary-rotation gate operation on a single qubit. Such an arbitrary-rotation gate operation may be decomposed into a plurality of single-qubit gates using three Euler rotation angle parameters $(\theta, \varphi, \lambda)$ ($\theta$, $\varphi$, and $\lambda$ are real numbers). The values of the Euler rotation angle parameters are obtained according to the rotation axis and the rotation angle.

For example, an arbitrary-rotation gate operation is decomposed using ZX decomposition into an equivalent circuit "$R_Z(\varphi)$-$R_X(\theta)$-$R_Z(\lambda)$", in which a rotation gate about the X-axis (an X rotation gate) and rotation gates about the Z-axis (Z rotation gates) are combined. This is expressed as "$(R_Z(\lambda) \cdot R_X(\theta) \cdot R_Z(\varphi))$" (where · denotes a tensor product).

In the case where the quantum device is a superconducting device, a Z rotation gate is virtually implemented through computational transformation, which eliminates the need for an actual gate operation on a qubit.

Note that an NISQ device may impose limits on allowable rotation angles, even for rotation operations about a rotation axis that are implementable as native gates. For example, a superconducting device is able to execute a Z rotation gate at any rotation angle, but may often limit X rotations to 90°. A 90° X rotation gate is an SX gate. Therefore, in order to implement a single-qubit gate for an arbitrary rotation, the single-qubit gate is decomposed into $R_Z$-SX-$R_Z$-SX-$R_Z$. For example, an arbitrary-rotation gate operation may be performed by "$R_Z(\varphi)$-$R_X(90)$-$R_Z(\theta)$-$R_X(90)$-$R_Z(\lambda)$".

As described above, in the case where the quantum device is a superconducting device, it is possible to implement an arbitrary-rotation gate operation by substantially performing two SX gate operations. On the other hand, in the case of a trapped-ion quantum device, the SX gate is not included in its native gates. Examples of single-qubit native gates for a trapped-ion quantum device include the following gates.

$$1Q1\left(\phi\right) = \begin{bmatrix} 0 & e^{-i\phi} \\ e^{i\phi} & 0 \end{bmatrix} \qquad (1)$$

$$1Q2\left(\phi\right) = \frac{1}{\sqrt{2}} \begin{bmatrix} 1 & -ie^{-i\phi} \\ -ie^{i\phi} & 1 \end{bmatrix} \qquad (2)$$

$1Q1(\varphi)$ is equivalent to a gate operation of "$R_Z(-2\varphi)$-X". This is expressed by the calculation formula "$1Q1(\varphi) = X \cdot R_Z(-2\varphi)$" (where · denotes a tensor product). $1Q2(\varphi)$ is equivalent to a gate operation of "$R_Z(-\varphi)$-SX-$R_Z(\varphi)$". This is expressed by the calculation formula "$1Q2(\varphi) = R_Z(\varphi) \cdot SX \cdot R_Z(-\varphi)$" (where· is a tensor product). Thus, in a trapped-ion quantum device, a single-qubit native gate is implemented as a gate operation in which Z rotation gates of arbitrary angles and $R_X(90)$ or $R_X(180)$ are combined.

An example of a two-qubit native gate of the trapped-ion quantum device is an MS gate given by Equation (3).

$$MS\left(\phi_0, \phi_1\right)$$
$$= \frac{1}{\sqrt{2}} \begin{bmatrix} 1 & 0 & 0 & -ie^{-i\left(\phi_0+\phi_1\right)} \\ 0 & 1 & -ie^{-i\left(\phi_0-\phi_1\right)} & 0 \\ 0 & -ie^{-i\left(\phi_0-\phi_1\right)} & 1 & 0 \\ -ie^{-i\left(\phi_0+\phi_1\right)} & 0 & 0 & 1 \end{bmatrix}$$

$$(3)$$

In the case where the values of the angle parameters $\varphi_1$ and $\varphi_2$ of the MS gate are both "0", the MS gate is equivalent to an $R_{XX}(\pi/2)$ gate ($MS(0, 0) = R_{XX}(\pi/2)$).

Here, consider a case in which an arbitrary-rotation gate operation is implemented in a trapped-ion quantum device. For example, an arbitrary-rotation gate operation "$R_Z(\varphi)$-SX-$R_Z(\theta)$-SX-$R_Z(\lambda)$" in a superconducting quantum device is transformed into a gate operation executable by a trapped-ion quantum device according to the following equation.

```
1Q2(φ')−1Q2(θ')−1Q1(λ')−1Q1(0)

= [Rz(-φ')−SX−Rz(φ')]−[Rz(-θ')−SX−Rz(θ')][Rz(-2λ')−X]−[X]

= Rz(-φ')−SX−Rz(φ'−θ')−SX−Rz(θ'−2λ')
```

Here, "$\varphi' = -\varphi$", "$\theta' = -(\varphi + \theta)$", and "$\lambda' = -(\varphi + \theta + \lambda)/2$".

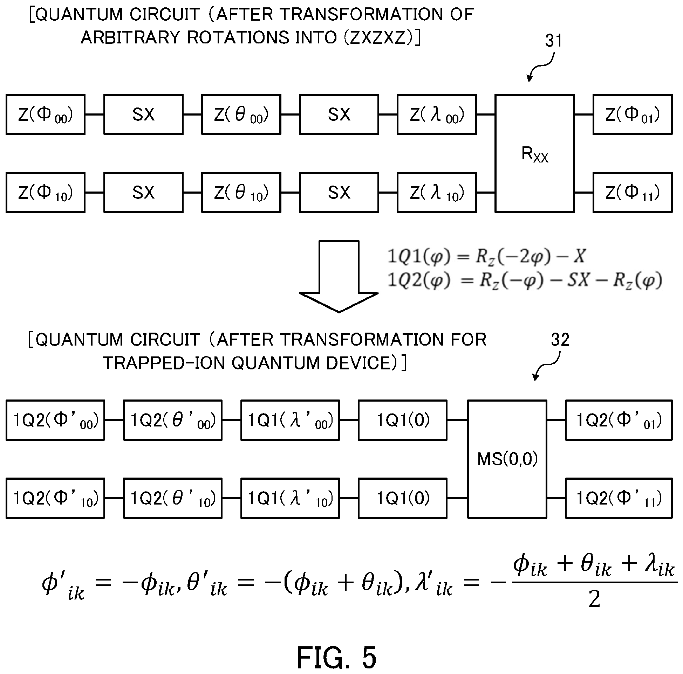

FIG. 5 illustrates examples of quantum circuits including arbitrary-rotation gate operations. For example, it is assumed that after an arbitrary-rotation gate operation is performed on each of two qubits, a gate operation "$R_{XX}$" is performed to implement XX interaction. The Euler rotation angle parameters for the first qubit are $(\theta_{00}, \varphi_{00}, \lambda_{00})$, and the Euler rotation angle parameters for the second qubit are $(\theta_{10}, \varphi_{10}, \lambda_{10})$.

In a quantum circuit 31 after a transformation of each arbitrary-rotation gate operation into ZXZXZ, gate operations "$R_Z(\varphi_{00})$-SX-$R_Z(\theta_{00})$-SX-$R_Z(\lambda_{00})$" are performed on the first qubit. In addition, gate operations "$R_Z(\varphi_{10})$-SX-$R_Z(\theta_{10})$-SX-$R_Z(\lambda_{10})$" are performed on the second qubit. Thereafter, a gate operation "$R_{XX}$" is performed on the two qubits.

In a quantum circuit 32 after the transformation for a trapped-ion quantum device, gate operations "1Q2($\varphi'_{00}$)-1Q2($\theta'_{00}$)-1Q1($\lambda'_{00}$)-1Q1(0)" are performed on the first qubit. In addition, gate operations "1Q2($\varphi'_{10}$)-1Q2($\theta'_{10}$)-1Q1($\lambda'_{10}$)-1Q1(0)" are performed on the second qubit. Thereafter, a gate operation "MS(0, 0)" is performed on the two qubits.

After that, arbitrary-rotation gate operations are sequentially transformed into native gates. Let i (i = 0, 1, 2, ...) denote an execution order of the arbitrary-rotation gate operations and k (k = 0, 1, 2, ...) denote the qubit number. Then, "$\varphi'_{ik} = -\varphi_{ik}$", "$\theta'_{ik} = -(\varphi_{ik} + \theta_{ik})$", and "$\lambda'_{ik} = -(\varphi_{ik} + \theta_{ik} + \lambda_{ik})/2$" are obtained.

As described above, in the case of a trapped-ion quantum device, implementing an arbitrary rotation using the gate operations "1Q2($\varphi'$)-1Q2($\theta'$)-1Q1($\lambda'$)-1Q1(0)" needs four gate operations. This is twice the number of gate operations needed to implement the gate operations "$R_Z(\varphi)$-SX-$R_Z(\theta)$-SX-$R_Z(\lambda)$" (two SX gate operations) in a superconducting device.

Quantum devices have a limited time during which a qubit is able to maintain its quantum state, referred to as coherence time. Therefore, it is desirable to implement a quantum computation with a gate circuit that includes as few gate operations as possible. There are, for example, the following two types of coherence time.

> T1: The time during which a qubit is able to maintain its excited state.
> T2: The time during which a qubit is able to maintain its superposition state.

If the time needed for gate operations according to a quantum circuit exceeds the coherence time, it is not possible to obtain a correct computation result. In addition, as the number of gate operations increases, the noise of the qubits increases, and the fidelity decreases. Therefore, it is desired that the number of gate operations when executing quantum computation is as small as possible.

For example, in the case of a quantum computer using a superconducting quantum device, an arbitrary-rotation gate operation is implemented with a relatively simple equivalent circuit by combining X rotation gates and Z rotation gates. However, in the case of a trapped-ion quantum device, it is not possible to implement an arbitrary rotation using an equivalent circuit in which X rotation gates and Z rotation gates are combined. Therefore, more native gates need to be combined, resulting in an increased number of gate operations. If the number of gate operations increases excessively, the time needed for the gate operations according to the quantum circuit may exceed the coherence time. If the execution time of the quantum circuit exceeds the coherence time, it is not possible to obtain a correct result.

In view of the above, in order to implement an arbitrary-rotation gate operation with a small number of gate operations, the classical computer device 100 incorporates the last Z rotation gate operation, which is obtained by decomposing the arbitrary-rotation gate operation into a plurality of gate operations, into the subsequent gate operations.

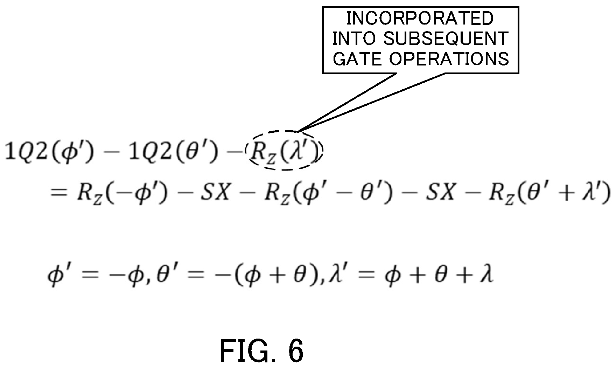

FIG. 6 illustrates an example of a gate operation decomposition method in order to perform an arbitrary rotation with a small number of gate operations. The classical computer device 100 decomposes an arbitrary-rotation gate operation into native gates of a trapped-ion quantum device corresponding to a rotation gate operation that leaves a predetermined amount of Z rotation, and a gate operation less than or equal to the Z rotation. The correspondence between the gate operations after the decomposition and the gate operations after a ZXZXZ transformation is as follows.

$$\text{``1Q2}(\varphi')-\text{1Q2}(\theta')-R_Z(\lambda') \;=\; R_Z(-\varphi')-SX-R_Z(\varphi'-\theta')-SX-R_Z(\theta'+\lambda')\text{''}$$

Here, "$\varphi' = -\varphi$", "$\theta' = -(\varphi + \theta)$", and "$\lambda' = \varphi + \theta + \lambda$". In many cases, the last Z rotation gate operation "$R_Z(\lambda')$" in the arbitrary-rotation gate operations "1Q2($\varphi'$)-1Q2($\theta'$)-$R_Z(\lambda')$" may be incorporated into the subsequent gate operations. For example, as illustrated in FIG. 5, an MS gate may be executed following an arbitrary rotation. In this case, by changing the angle parameters of the MS gate, it is possible to incorporate the last Z rotation gate operation "$R_Z(\lambda')$" obtained by decomposing the arbitrary-rotation gate operation into the subsequent MS gate.

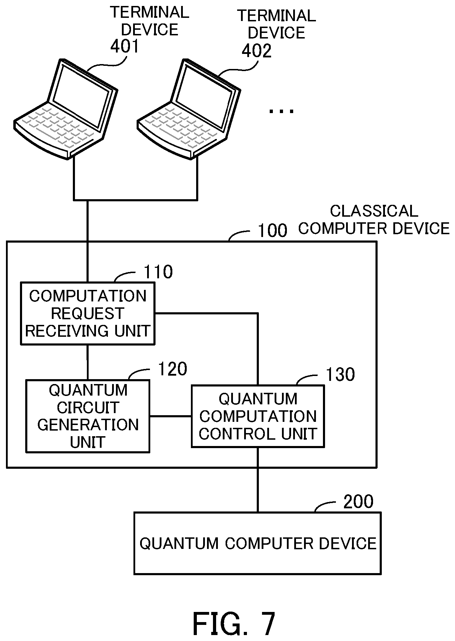

FIG. 7 illustrates an example of functions of the classical computer device. The classical computer device 100 includes a computation request receiving unit 110, a quantum circuit generation unit 120, and a quantum computation control unit 130.

The computation request receiving unit 110 receives a computation request for quantum computation from the terminal devices 401, 402, .... The computation request receiving unit 110 requests the quantum circuit generation unit 120 to generate a quantum circuit corresponding to the specified quantum computation. Upon receiving a computation result from the quantum computation control unit 130, the computation request receiving unit 110 transmits the computation result to the terminal device that has sent the computation request.

The quantum circuit generation unit 120 generates a quantum circuit for executing the quantum computation specified by the computation request receiving unit 110. For example, the quantum circuit generation unit 120 generates a quantum circuit while allowing the use of quantum gates other than the native gates of the trapped-ion quantum device. Then, the quantum circuit generation unit 120 transforms the generated quantum circuit into a quantum circuit using the native gates of the trapped-ion quantum device. The quantum circuit generation unit 120 transmits the transformed quantum circuit to the quantum computation control unit 130.

The quantum computation control unit 130 instructs the quantum computer device 200 to perform gate operations on qubits in accordance with each of a plurality of quantum circuits acquired from the quantum circuit generation unit 120. Each time the gate operations according to a quantum circuit are completed, the quantum computation control unit 130 receives a measurement result of the states of the qubits from the quantum computer device 200. The measurement result includes a probability distribution of the qubit states (bit string). The quantum computation control unit 130 computes a solution to the problem to be solved from the measurement results obtained from the plurality of quantum circuits, and transmits the computation result to the computation request receiving unit 110.

In this connection, the function of each element illustrated in FIG. 7 may be implemented by causing a computer to execute a program module corresponding to that element, for example.

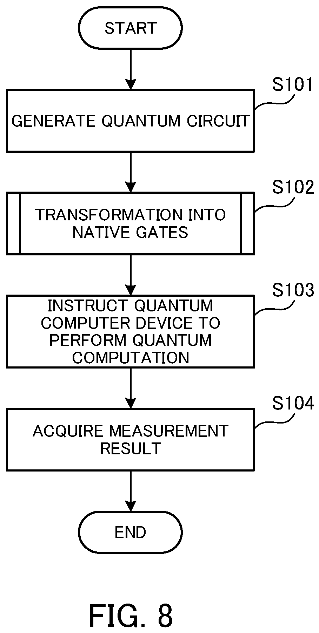

FIG. 8 is a flowchart illustrating an example procedure for quantum computation. Hereinafter, the process illustrated in FIG. 8 will be described in order of step numbers.

[Step S101] The computation request receiving unit 110 receives a computation request for quantum computation from any terminal device. Then, the computation request receiving unit 110 instructs the quantum circuit generation unit 120 to generate a quantum circuit. In response to the instruction, the quantum circuit generation unit 120 generates a quantum circuit corresponding to the problem to be solved. The quantum circuit generated at this time includes quantum gates other than the native gates of a trapped-ion quantum device.

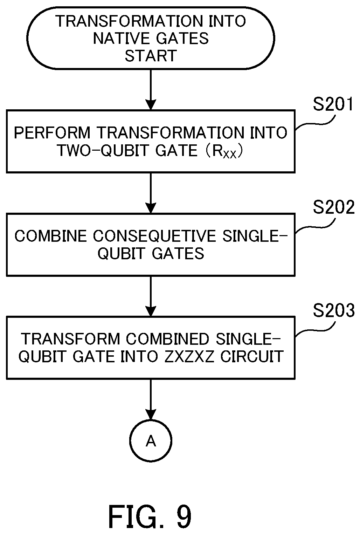

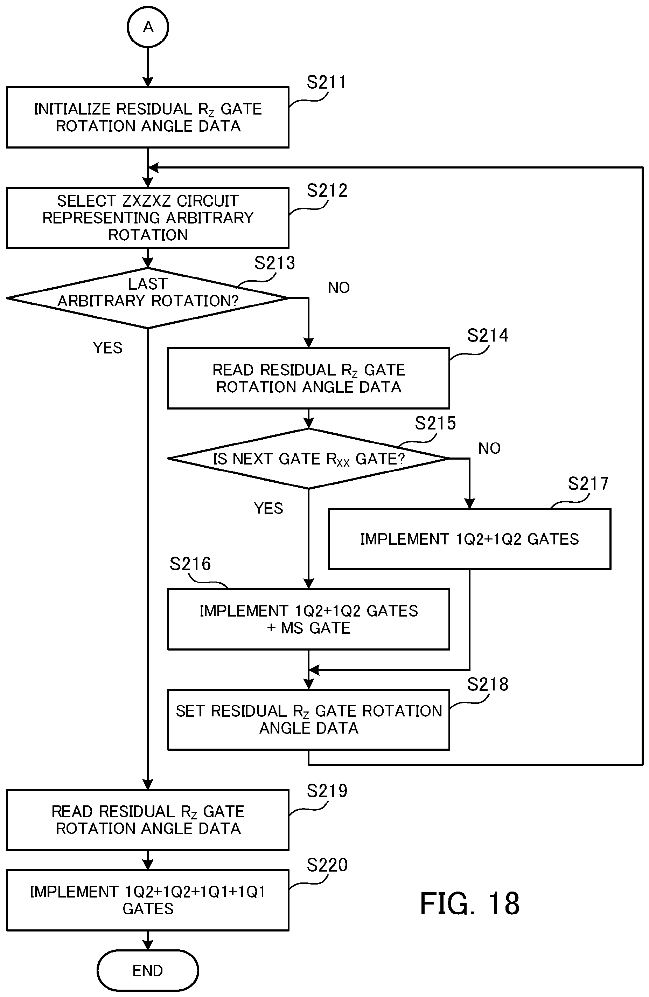

[Step S102] The quantum circuit generation unit 120 transforms the generated quantum circuit into native gates. Details of the transformation process into native gates will be described later (see FIGS. 9 and 18).

[Step S103] The quantum computation control unit 130 instructs the quantum computer device 200 to perform quantum computation based on the quantum circuit configured with native gates. Then, the quantum computer device 200 executes quantum computation according to the quantum circuit. The quantum computer device 200 transmits the result of a measurement performed at the end of the quantum computation to the quantum computation control unit 130.

[Step S104] The quantum computation control unit 130 acquires the measurement result from the quantum computer device 200. The quantum computation control unit 130 computes a solution to the problem to be solved based on the acquired measurement result, and transmits the computation result to the computation request receiving unit 110. The computation request receiving unit 110 transmits the computation result to the terminal device that has sent the computation request.

Next, the transformation process into native gates will be described in detail.

FIG. 9 is a flowchart (1/2) illustrating an example procedure for the transformation process into native gates. Hereinafter, the process illustrated in FIG. 9 will be described in order of step numbers.

[Step S201] The quantum circuit generation unit 120 transforms a two-qubit gate into a two-qubit gate using an $R_{XX}$ gate.

[Step S202] The quantum circuit generation unit 120 combines consecutive single-qubit gates. For example, combining an X rotation gate, a Y rotation gate, and a Z rotation gate results in one single-qubit gate for an arbitrary rotation.

[Step S203] The quantum circuit generation unit 120 transforms the combined single-qubit gate into a ZXZXZ circuit. Thereafter, the quantum circuit generation unit 120 advances the process to step S211 (see FIG. 18).

In this way, first, consecutive single-qubit gates are transformed into a ZXZXZ circuit. Then, the transformation from the ZXZXZ circuit to the native gates of the trapped-ion quantum device is performed.

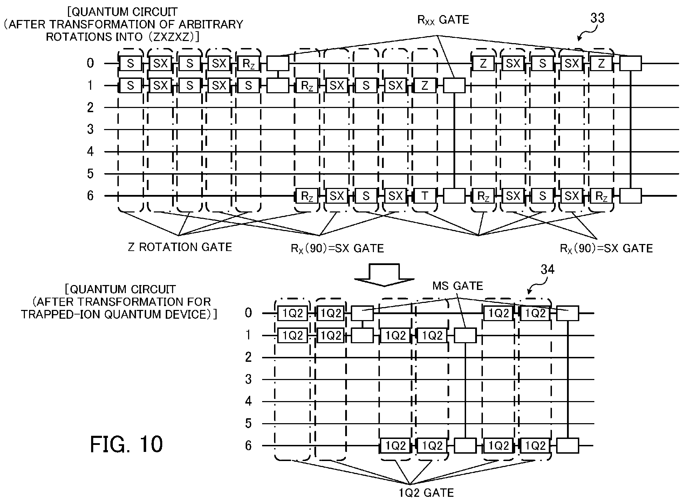

FIG. 10 illustrates an example of a transformation from ZXZXZ circuits to native gates of a trapped-ion quantum device. A quantum circuit 33 is a quantum circuit obtained by transforming arbitrary-rotation gate operations into ZXZXZ circuits. In the quantum circuit 33, single-qubit gates denoted by "Z", "S", "T", and "$R_Z$" are Z rotation gates. Each Z rotation gate denoted by "Z" is a Z gate (180° rotation about the Z-axis). "S" indicates an S gate (90° rotation about the Z-axis). "T" indicates a T gate (45° rotation about the Z-axis). "$R_Z$" indicates a rotation gate about the Z-axis at a rotation angle other than 180°, 90°, and 45°. Two-qubit gates illustrated in the quantum circuit 33 are $R_{XX}(\pi/2)$ gates. Hereinafter, the $R_{XX}(\pi/2)$ gates may be simply referred to as $R_{XX}$ gates.

In the quantum circuit 33, "Z rotation gate - SX gate - Z rotation gate - SX gate - Z rotation gate" are arranged for each of the zeroth and first qubits, and then an $R_{XX}$ gate that acts on the zeroth and first qubits is arranged. Next, "Z rotation gate - SX gate - Z rotation gate - SX gate - Z rotation gate" are arranged for each of the first and sixth qubits, and then an $R_{XX}$ gate that acts on the first and sixth qubits is arranged. Further, "Z rotation gate - SX gate - Z rotation gate - SX gate - Z rotation gate" are arranged for each of the zeroth and sixth qubits, and then an $R_{XX}$ gate that acts on the zeroth and sixth qubits is arranged.

A quantum circuit 34 is a quantum circuit after a transformation into native gates of a trapped-ion quantum device. In the quantum circuit 34, single-qubit gates denoted by "1Q2" are the 1Q2 gate given by Equation (2). Two-qubit gates illustrated in the quantum circuit 34 are the MS gates given by Equation (3).

In the quantum circuit 34, "1Q2 gate - 1Q2 gate" are arranged for each of the zeroth and first qubits, and then an MS gate that acts on the zeroth and first qubits is arranged. Next, "1Q2 gate - 1Q2 gate" are arranged for each of the first and sixth qubits, and then an MS gate that acts on the first and sixth qubits is arranged. Further, "1Q2 gate - 1Q2 gate" are arranged for each of the zeroth and sixth qubits, and then an MS gate that acts on the zeroth and sixth qubits is arranged.

In this way, a quantum circuit in which the ZXZXZ circuits and the $R_{XX}$ gates are alternately arranged is transformed into a quantum circuit in which two 1Q2 gates and MS gates are alternately arranged. At this time, the angle parameters of the 1Q2 gates and the MS gates are calculated based on the angle parameters of the ZXZXZ circuits and the $R_{XX}$ gates.

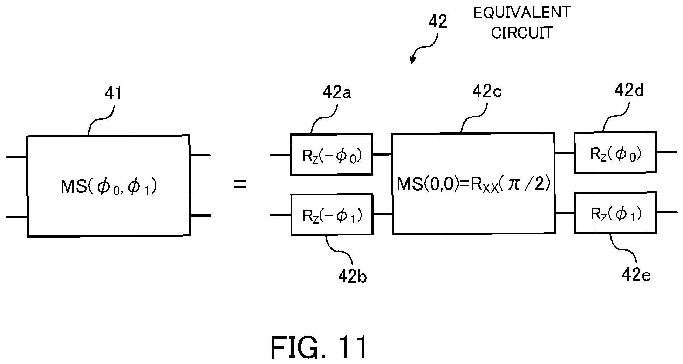

FIG. 11 illustrates an example of a correspondence between an MS gate and an $R_{XX}$ gate. An MS gate 41, in which arbitrary angle parameters "$\varphi_0$, $\varphi_1$" are set, may be represented by an equivalent circuit 42.

The equivalent circuit 42 includes Z rotation gates 42a and 42b for two qubits, an $R_{XX}$ gate 42c, and Z rotation gates 42d and 42e for the two qubits. The rotation angle of the Z rotation gate 42a is "$-\varphi_0$". The rotation angle of the Z rotation gate 42b is "$-\varphi_1$". The rotation angle of the $R_{XX}$ gate 42c is "$\pi/2$", and the $R_{XX}$ gate 42c with this rotation angle performs the same gate operation as an MS gate in which both of the two angle parameters are "0". The rotation angle of the Z rotation gate 42d is "$\varphi_0$". The rotation angle of the Z rotation gate 42e is "$\varphi_1$".

As illustrated in FIG. 11, the MS gate 41 may be replaced by the equivalent circuit 42 using the $R_{XX}$ gate 42c and the plurality of Z rotation gates 42a, 42b, 42d, and 42e. In other words, if it is possible to generate a sub-circuit corresponding to the equivalent circuit 42 by transforming a quantum circuit, the sub-circuit may be replaced by the MS gate 41.

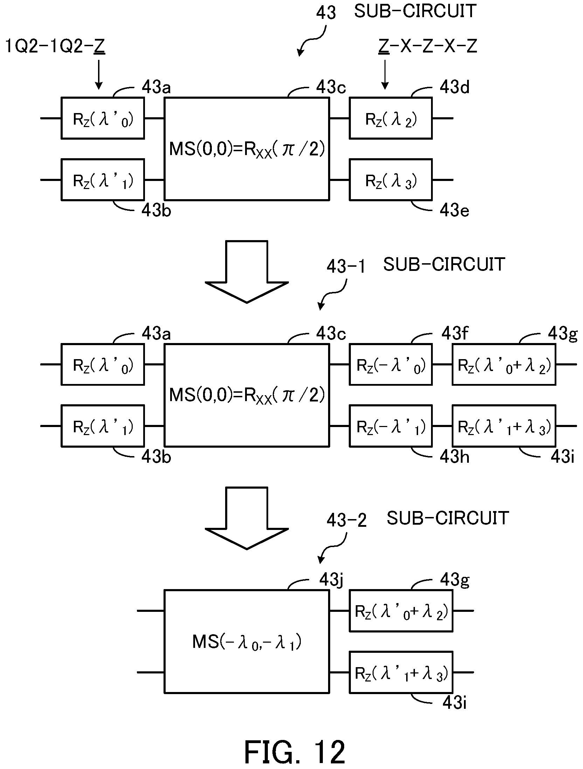

FIG. 12 illustrates an example of a transformation process for a sub-circuit including an $R_{XX}$ gate. A sub-circuit 43 includes Z rotation gates 43a and 43b respectively for two qubits, an $R_{XX}$ gate 43c, and Z rotation gates 43d and 43e respectively for the two qubits. The rotation angle of the Z rotation gate 43a is "$\lambda'_0$". The rotation angle of the Z rotation gate 43b is "$\lambda'_1$". The rotation angle of the $R_{XX}$ gate 43c is "$\pi/2$". The rotation angle of the Z rotation gate 43d is "$\lambda_2$". The rotation angle of the Z rotation gate 43e is "$\lambda_3$".

Each of the Z rotation gates 43a and 43b is, for example, a quantum gate representing the last Z rotation of a "1Q2-1Q2-$R_z$" circuit generated by transforming a single-qubit gate for an arbitrary rotation immediately preceding the $R_{XX}$ gate 43c. Each of the Z rotation gates 43d and 43e is, for example, a quantum gate representing the first Z rotation of a ZXZXZ circuit generated by transforming a single-qubit gate for an arbitrary rotation immediately following the $R_{XX}$ gate 43c.

By decomposing each of the Z rotation gates 43d and 43e, the sub-circuit 43 is transformed into a sub-circuit 43-1. The Z rotation gate 43d is replaced by a Z rotation gate 43f having a rotation angle "$-\lambda'_0$" and a Z rotation gate 43g having a rotation angle "$\lambda'_0 + \lambda_2$". The Z rotation gate 43e is replaced by a Z rotation gate 43h having a rotation angle "$-\lambda'_1$" and a Z rotation gate 43i having a rotation angle "$\lambda'_1 + \lambda_3$".

As described above, the Z rotation gates 43f and 43h corresponding to the Z rotation gates 42d and 42e of the equivalent circuit 42 illustrated in FIG. 11 are inserted after the $R_{XX}$ gate 43c. By inserting the Z rotation gates 43f and 43h, additional Z rotations are performed. Therefore, the Z rotation gates 43d and 43e before the transformation are transformed into the Z rotation gates 43g and 43i, each of which performs an additional rotation in the opposite direction by the rotation angle of the corresponding Z rotation gate 43f or 43h.

The Z rotation gates 43a and 43b, the $R_{XX}$ gate 43c, and the Z rotation gates 43f and 43h in the sub-circuit 43-1 have the same configuration as that of the equivalent circuit 42 illustrated in FIG. 11. Therefore, the sub-circuit 43-1 is transformable into a sub-circuit 43-2 by transforming the Z rotation gates 43a and 43b, the $R_{XX}$ gate 43c, and the Z rotation gates 43f and 43h into an MS gate 43j. The angle parameters of the MS gate 43j are $(-\lambda_0, -\lambda_1)$.

Thus, the sub-circuit 43 including the $R_{XX}$ gate 43c is transformable into the sub-circuit 43-2 using the MS gate 43j. In the example illustrated in FIG. 12, it is assumed that the $R_{XX}$ gate 43c is interposed between two arbitrary-rotation gate operations. If no $R_{XX}$ gate is interposed between two arbitrary-rotation gate operations, consecutive Z rotation gates are replaceable with a single Z rotation gate.

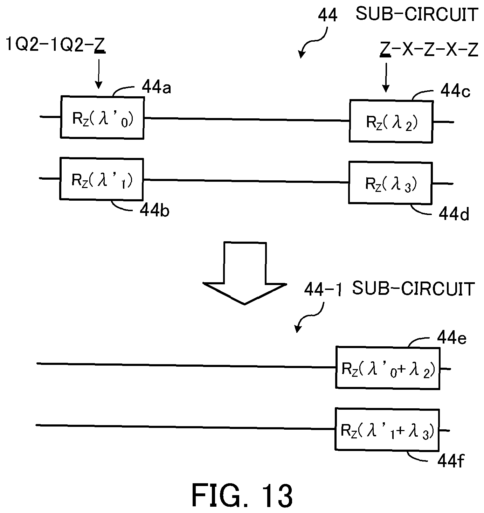

FIG. 13 illustrates an example of a transformation process for a sub-circuit including an $R_{XX}$ gate. A sub-circuit 44 includes consecutive Z rotation gates 44a and 44c for the first qubit and consecutive Z rotation gates 44b and 44d for the second qubit. The rotation angle of the Z rotation gate 44a is "$\lambda'_0$". The rotation angle of the Z rotation gate 44b is "$\lambda'_1$". The rotation angle of the Z rotation gate 44c is "$\lambda_2$". The rotation angle of the Z rotation gate 44d is "$\lambda_3$".

Each of the Z rotation gates 44a and 44b is, for example, a quantum gate representing the last Z rotation of a "1Q2-1Q2-$R_z$" circuit generated by transforming a single-qubit gate for an arbitrary rotation. Each of the Z rotation gates 44c and 44d is a quantum gate representing the first Z rotation of a ZXZXZ circuit generated by transforming the subsequent single-qubit gate for an arbitrary rotation.

The consecutive Z rotation gates in the sub-circuit 44 are replaceable with a single Z rotation gate. For example, in a sub-circuit 44-1, the consecutive Z rotation gates 44a and 44c are replaced by a single Z rotation gate 44e, and the consecutive Z rotation gates 44c and 44d are replaced by a single Z rotation gate 44f. The rotation angle of the Z rotation gate 44e is "$\lambda'_0 + \lambda_2$". The rotation angle of the Z rotation gate 44f is "$\lambda'_1 + \lambda_3$".

By performing the sub-circuit transformation as illustrated in FIGS. 12 and 13, the quantum circuit generation unit 120 incorporates the last Z rotation gate of a "1Q2-1Q2-Z" circuit, which is obtained by transforming an arbitrary-rotation gate operation for a trapped-ion quantum device, into the next quantum gate. The quantum circuit generation unit 120 performs the above-described circuit transformation sequentially from the beginning of a quantum circuit.

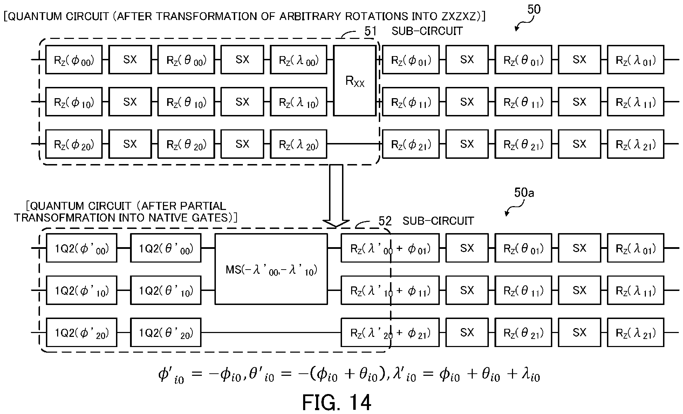

FIG. 14 is a first diagram illustrating an example of a transformation of quantum gates for arbitrary rotations into native gates. A quantum circuit 50 illustrates gate operations on three qubits. In the quantum circuit 50, after an arbitrary-rotation gate operation is performed on each of the three qubits, the gate operation of an $R_{XX}$ gate is performed on the first and second qubits, and then an arbitrary-rotation gate operation is performed on each of the three qubits.

The Euler rotation angle parameters of the first arbitrary rotation for the first qubit are $(\varphi_{00}, \theta_{00}, \lambda_{00})$. The Euler rotation angle parameters of the first arbitrary rotation for the second qubit are $(\varphi_{10}, \theta_{10}, \lambda_{10})$. The Euler rotation angle parameters of the first arbitrary rotation for the third qubit are $(\varphi_{20}, \theta_{20}, \lambda_{20})$. The Euler rotation angle parameters of the second arbitrary rotation for the first qubit are $(\varphi_{01}, \theta_{01}, \lambda_{01})$. The Euler rotation angle parameters of the second arbitrary rotation for the second qubit are $(\varphi_{11}, \theta_{11}, \lambda_{11})$. The Euler rotation angle parameters for the second arbitrary rotation of the third qubit are $(\varphi_{21}, \theta_{21}, \lambda_{21})$.

The quantum circuit 50 illustrates a state after the arbitrary-rotation gate operations are transformed into ZXZXZ circuits. A sub-circuit 51 included in the quantum circuit 50 includes the ZXZXZ circuits representing arbitrary-rotation gate operations and the $R_{XX}$ gate. The sub-circuit 51 is transformed into a sub-circuit 52 by transforming the ZXZXZ circuits into "1Q2-1Q2-Z" circuits and incorporating the last Z rotation gates into the subsequent quantum gates as illustrated in FIG. 12.

In the sub-circuit 52, a 1Q2 gate with a rotation angle "$\varphi'_{00}$" and a 1Q2 gate with a rotation angle "$\theta'_{00}$" are arranged for the first qubit. A 1Q2 gate with a rotation angle "$\varphi'_{10}$" and a 1Q2 gate with a rotation angle "$\theta'_{10}$" are arranged for the second qubit. A 1Q2 gate with a rotation angle "$\varphi'_{20}$" and a 1Q2 gate with a rotation angle "$\theta'_{20}$" are arranged for the third qubit. Thereafter, an MS gate with angle parameters "$-\lambda'_{00}, -\lambda'_{10}$" is arranged. At this time, the Z rotations of the last angles "$\lambda'_{00}$", "$\lambda'_{10}$", and "$\lambda'_{20}$" for the respective qubits after the transformation to the "1Q2-1Q2-Z" circuits are absorbed into the MS gate and the following Z rotation gates.

The angle parameters "$\varphi'_{i0}, \theta'_{i0}, \lambda'_{i0}$" of the quantum gate for the i-th (i = 0, 1, 2) qubit in the sub-circuit 52 have the following values.

$$\varphi'_{i0} = -\varphi_{i0}$$

$$\theta'_{i0} = -(\varphi_{i0} + \theta_{i0})$$

$$\lambda'_{i0} = \varphi_{i0} + \theta_{i0} + \lambda_{i0}$$

The rotation angle of each Z rotation gate with "$\varphi_{i1}$" is replaced by "$\lambda'_{i0} + \varphi_{i1}$". This transformation process is sequentially performed from the beginning of the quantum circuit 50.

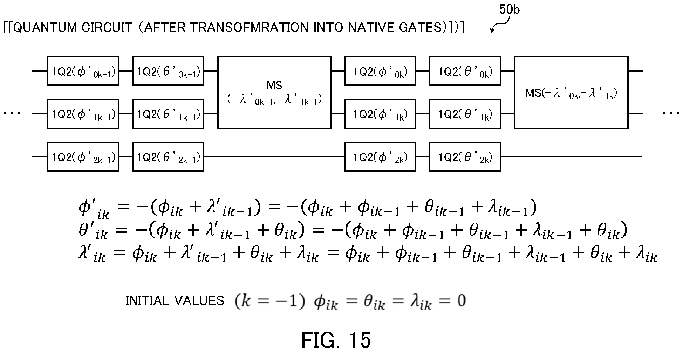

FIG. 15 is a second diagram illustrating an example of a transformation of quantum gates for arbitrary rotations into native gates. FIG. 15 illustrates a quantum circuit 50b after the second and subsequent arbitrary-rotation gate operations are also transformed into native gates.

Assume that the Euler rotation angle parameters of the k-th arbitrary-rotation gate operation for the i-th qubit are $(\varphi_{ik}, \theta_{ik}, \lambda_{ik})$. In this case, the angle parameters "$\varphi'_{ik}, \theta'_{ik}, \lambda'_{ik}$" after a transformation of the k-th arbitrary-rotation gate operation have the following values.

$$\varphi'_{ik} = -(\varphi_{ik} + \lambda'_{ik-1}) = -(\varphi_{ik} + \varphi_{ik-1} + \theta_{ik-1} + \lambda_{ik-1})$$

$$\theta'_{ik} = -(\varphi_{ik} + \lambda'_{ik-1} + \theta_{ik}) = -(\varphi_{ik} + \varphi_{ik-1} + \theta_{ik-1} + \lambda_{ik-1} + \theta_{ik})$$

$$\lambda'_{ik} = \varphi_{ik} + \lambda'_{ik-1} + \theta_{ik} + \lambda_{ik} = \varphi_{ik} + \varphi_{ik-1} + \theta_{ik-1} + \lambda_{ik-1} + \theta_{ik} + \lambda_{ik}$$

Here, the initial values (k = -1) of the Euler rotation angle parameters are "$\varphi_{ik} = \theta_{ik} = \lambda_{ik} = 0$".

The last arbitrary-rotation gate operation in the quantum circuit has no subsequent quantum gate to incorporate the gate operation of the last Z rotation gate. Therefore, the quantum circuit generation unit 120 transforms the Z rotation gate into corresponding native gates.

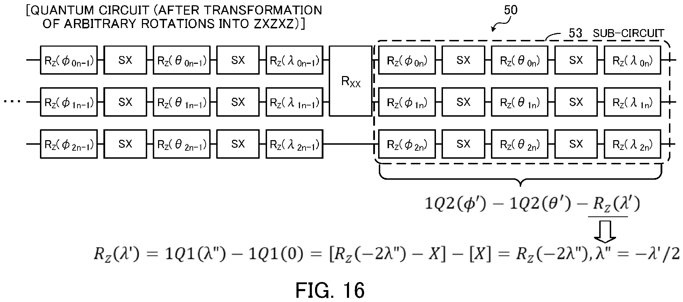

FIG. 16 illustrates an example of the transformation of the last gate operations for arbitrary rotations into native gates. For example, it is assumed that, in the quantum circuit 50 after arbitrary rotations are transformed into ZXZXZ circuits, the n-th arbitrary-rotation gate operation (n is a natural number) is the last gate operation.

A sub-circuit 53 representing the n-th gate operation is expressed as "$R_Z(\varphi_{in})$-SX-$R_Z(\theta_{in})$-SX-$R_Z(\lambda_{in})$". This sub-circuit 53 is transformed into "1Q2($\varphi$')-1Q2($\theta$')-$R_Z(\lambda$')". Here, $R_Z(\lambda') = 1Q1(\lambda'') - 1Q1(0) = [R_Z(-2\lambda'')] - X] - [X] = R_Z(-2\lambda'')$. Here, "$\lambda'' = -\lambda'/2$".

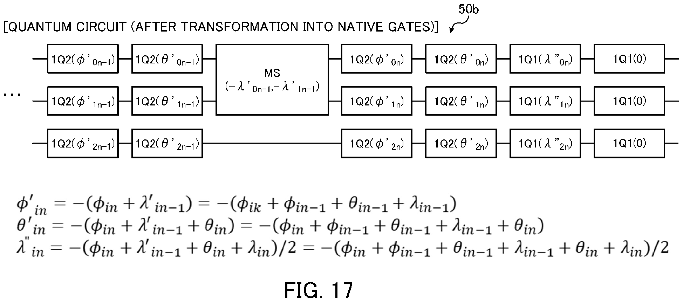

FIG. 17 is a third diagram illustrating an example of a transformation of quantum gates for arbitrary rotations into native gates. FIG. 17 illustrates the last arbitrary-rotation gate operations in the quantum circuit 50b. The sub-circuit 53 illustrated in FIG. 16 is transformed into "1Q2($\varphi'_{in}$)-1Q2($\theta'_{in}$)-1Q1($\lambda''_{in}$)-1Q1(0)". In this case, the angle parameters "$\varphi'_{in}$, $\theta'_{in}$, $\lambda''_{in}$" after the transformation for the n-th arbitrary-rotation gate operation have the following values.

$$\varphi'_{in} = -(\varphi_{in} + \lambda'_{in-1}) = -(\varphi_{in} + \varphi_{in-1} + \theta_{in-1} + \lambda_{in-1})$$

$$\theta'_{in} = -(\varphi_{in} + \lambda'_{in-1} + \theta_{in}) = -(\varphi_{in} + \varphi_{in-1} + \theta_{in-1} + \lambda_{in-1} + \theta_{in})$$

$$\lambda''_{in} = -(\varphi_{in} + \lambda'_{in-1} + \theta_{in} + \lambda_{in})/2 = -(\varphi_{in} + \varphi_{in-1} + \theta_{in-1} + \lambda_{in-1} + \theta_{in} + \lambda_{in})/2$$

Thus, the last arbitrary-rotation gate operation is implemented by four native gates.

FIG. 18 is a flowchart (2/2) illustrating the example procedure for the transformation process into native gates. Hereinafter, the process illustrated in FIG. 18 will be described in order of step numbers.

[Step S211] The quantum circuit generation unit 120 initializes the residual $R_Z$ gate rotation angle data to "0".

[Step S212] The quantum circuit generation unit 120 sequentially selects a ZXZXZ circuit representing an arbitrary-rotation gate operation from the beginning of the quantum circuit.

[Step S213] The quantum circuit generation unit 120 determines whether the selected ZXZXZ circuit is the last arbitrary-rotation gate operation in the quantum circuit. If it is the last arbitrary-rotation gate operation, the quantum circuit generation unit 120 advances the process to step S219. If the gate operation is not the last arbitrary-rotation gate operation, the quantum circuit generation unit 120 advances the process to step S214.

[Step S214] The quantum circuit generation unit 120 reads the residual $R_Z$ gate rotation angle data.

[Step S215] The quantum circuit generation unit 120 determines whether the gate operation of the selected ZXZXZ circuit is an $R_{XX}$ gate. If the next gate is an $R_{XX}$ gate, the quantum circuit generation unit 120 advances the process to step S216. If the next gate is not an $R_{XX}$ gate, the quantum circuit generation unit 120 advances the process to step S217.

[Step S216] The quantum circuit generation unit 120 collectively transform, for each of the two qubits to be operated by the $R_{XX}$ gate, the $R_{XX}$ gate following the selected ZXZXZ circuit and the ZXZXZ circuit immediately preceding the $R_{XX}$ gate, into native gates. For example, for each of the two qubits to be operated by the $R_{XX}$ gate, the quantum circuit generation unit 120 implements a 1Q2 gate and a 1Q2 gate in pace of the ZXZX circuit, and implements an MS gate in pace of the $R_{XX}$ gate. The rotation angle of each implemented quantum gate is calculated using the current residual $R_Z$ gate rotation angle data ($\lambda'_{ik-1}$). Thereafter, the quantum circuit generation unit 120 advances the process to step S218.

[Step S217] The quantum circuit generation unit 120 implements 1Q2 gate + 1Q2 gate in pace of the selected ZXZXZ circuit.

[Step S218] The quantum circuit generation unit 120 sets the residual $R_Z$ gate rotation angle ($\lambda'_{ik}$) in the residual $R_Z$ gate rotation angle data. Thereafter, the quantum circuit generation unit 120 advances the process to step S212.

[Step S219] The quantum circuit generation unit 120 reads the current residual $R_Z$ gate rotation angle data ($\lambda'_{ik-1}$).

[Step S220] The quantum circuit generation unit 120 implements, for each qubit to be operated by the quantum circuit, 1Q2 + 1Q2 + 1Q1 + 1Q1 gates in place of the last ZXZXZ circuit.

In this way, each quantum gate in the quantum circuit is transformed into native gates of a trapped-ion quantum device. Moreover, each arbitrary-rotation gate operation, except for the last arbitrary-rotation gate operation, is implemented with two single-qubit gates. This makes it possible to improve the efficiency of quantum computation and facilitate computation within the coherence time. In addition, by reducing the number of quantum gates, noise due to gate operations is reduced, and fidelity is improved.

[Other Embodiments]

While the second embodiment describes an example using a trapped-ion quantum device, the disclosed techniques are also applicable to quantum computer systems using quantum devices other than the trapped-ion quantum device, provided that MS, 1Q1, and 1Q2 gate operations are executable.

The above description is merely indicative of the principles of the embodiments. A wide variety of modifications and changes may also be made by those skilled in the art. The embodiments are not limited to the precise configurations and example applications indicated and described above, and all appropriate modifications and equivalents are regarded as falling within the scope of the embodiments as defined by the appended patent claims and their equivalents.

Reference Signs List

    1 Quantum computer device
    2, 3 Quantum circuit
    2a, 2b, 2d, 2e, 3a to 3d, 3f, 3g Rotation gate
    2c, 3e MS gate
    4a, 4b Sub-circuit
    10 Information processing apparatus
    11 Storage unit
    12 processing unit

**Claims**

1. A quantum circuit transformation program that causes a computer to perform a process comprising:

    transforming a first rotation gate, which is included in a quantum circuit and represents a gate operation for a predetermined rotation that rotates a state of a qubit to be operated about an axis different from coordinate axes, into a sub-circuit that performs a rotation gate operation in which a rotation about a Z-axis is insufficient by a predetermined angle relative to the predetermined rotation; and
    changing, in the quantum circuit, a gate operation of one or a plurality of quantum gates following the first rotation gate, which acts on the qubit to be operated, to a gate operation that performs an additional rotation about the Z-axis by the predetermined angle.

2. The quantum circuit transformation program according to claim 1, wherein the transforming into the sub-circuit includes transforming the first rotation gate into the sub-circuit including

    a second rotation gate configured to change the state of the qubit to be operated, in a single gate operation, to a state resulting from a rotation about the Z-axis by an angle $-\varphi'$ ($\varphi'$ is a real number), a rotation about an X-axis by 90°, and a rotation about the Z-axis by an angle $\varphi'$, and
    a third rotation gate configured to change the state of the qubit to be operated, in a single gate operation, to a state resulting from a rotation about the Z-axis by an angle $-\theta'$ ($\theta'$ is a real number), a rotation about the X-axis by 90°, and a rotation about the Z-axis by an angle $\theta'$.

3. The quantum circuit transformation program according to claim 2, wherein

    the transforming into the sub-circuit includes decomposing the predetermined rotation into a rotation about the Z-axis by an angle $\varphi$ ($\varphi$ is a real number), a rotation about the X-axis by an angle $\theta$ ($\theta$ is a real number), and a rotation about the Z-axis by an angle $\lambda$ ($\lambda$ is a real number), and setting rotation angles of the second rotation gate and the third rotation gate to $\varphi' = -\varphi$ and $\theta' = -(\varphi + \theta)$, and
    the changing of the gate operation of the one or the plurality of quantum gates following the first rotation gate includes changing the gate operation of the one or the plurality of quantum gates following the first rotation gate, to a gate operation that performs an additional rotation about the Z-axis by the predetermined angle $\lambda'$ obtained by $\lambda' = \varphi + \theta + \lambda$ ($\lambda'$ is a real number).

4. The quantum circuit transformation program according to claim 2, wherein
the transforming into the sub-circuit includes adding, in response to the single-qubit gate being a last qubit gate in the quantum circuit, a fourth rotation gate and a fifth rotation gate next to the third rotation gate in the sub-circuit, the fourth rotation gate being configured to change the state of the qubit to be operated, in a single gate operation, to a state resulting from a rotation about the Z-axis by the predetermined angle and a rotation about the X-axis by 180°, the fifth rotation gate being configured to rotate the state of the qubit to be operated about the X-axis by 180°.

**5.** The quantum circuit transformation program according to claim 1, wherein the changing of the gate operation of the one or the plurality of quantum gates following the first rotation gate includes setting an angle parameter of a Mølmer-Sørenson (MS) gate next to the first rotation gate to a value obtained by reversing a sign of the predetermined angle, and adding the predetermined angle to a rotation angle about the Z-axis of a sixth rotation gate next to the MS gate.

**6.** The quantum circuit transformation program according to claim 1, wherein the changing of the gate operation of the one or the plurality of quantum gates following the first rotation gate includes adding the predetermined angle to a rotation angle of a seventh rotation gate next to the first rotation gate, the seventh rotation gate representing a rotation about the Z-axis.

**7.** The quantum circuit transformation program according to claim 1, wherein the process further includes transforming, in response to detecting a plurality of consecutive single-qubit gates acting on a single qubit in the quantum circuit, the plurality of consecutive single-qubit gates into one single-qubit gate configured to perform the predetermined rotation.

**8.** The quantum circuit transformation program according to claim 1, wherein the process further includes

identifying the first rotation gate representing a gate operation that performs the predetermined rotation, in order from a beginning of the quantum circuit, and

performing, each time the first rotation gate is identified, the transforming of the first rotation gate into the sub-circuit and the changing of the gate operation of the one or the plurality of quantum gates following the first rotation gate.

**9.** A quantum circuit transformation method executed by a computer, the quantum circuit transformation method comprising:

transforming a first rotation gate, which is included in a quantum circuit and represents a gate operation for a predetermined rotation that rotates a state of a qubit to be operated about an axis different from coordinate axes, into a sub-circuit that performs a rotation gate operation in which a rotation about a Z-axis is insufficient by a predetermined angle relative to the predetermined rotation; and

changing, in the quantum circuit, a gate operation of one or a plurality of quantum gates following the first rotation gate, which acts on the qubit to be operated, to a gate operation that performs an additional rotation about the Z-axis by the predetermined angle.

**10.** An information processing apparatus comprising:
a processing unit configured to:

transform a first rotation gate, which is included in a quantum circuit and represents a gate operation for a predetermined rotation that rotates a state of a qubit to be operated about an axis different from coordinate axes, into a sub-circuit that performs a rotation gate operation in which a rotation about a Z-axis is insufficient by a predetermined angle relative to the predetermined rotation; and

change, in the quantum circuit, a gate operation of one or a plurality of quantum gates following the first rotation gate, which acts on the qubit to be operated, to a gate operation that performs an additional rotation about the Z-axis by the predetermined angle.

FIG. 1

TERMINAL DEVICE 401

TERMINAL DEVICE 402

. . .

20

NETWORK

300

QUANTUM COMPUTING SYSTEM

200

100

QUANTUM COMPUTER DEVICE

CLASSICAL COMPUTER DEVICE

# FIG. 2

FIG. 3

CLASSICAL COMPUTER
DEVICE

21 MONITOR

100

104

101

| CPU | GPU |

22 KEYBOARD

105

102

| RAM | INPUT INTERFACE |

23 MOUSE

OPTICAL
DISC

103

106

24

| HDD | OPTICAL DRIVE DEVICE |

107

25 MEMORY
DEVICE

109

| NETWORK INTERFACE | DEVICE CONNECTION INTERFACE |

100a BUS

| DEVICE CONNECTION INTERFACE |

108

26
MEMORY
READER/WRITER

27
MEMORY CARD

20

200

NETWORK

| QUANTUM COMPUTER DEVICE |

FIG. 4

[QUANTUM CIRCUIT (AFTER TRANSFORMATION OF
ARBITRARY ROTATIONS INTO (ZXZXZ)]

31

| $Z(\Phi_{00})$ | SX | $Z(\theta_{00})$ | SX | $Z(\lambda_{00})$ | | $Z(\Phi_{01})$ |

$R_{XX}$

| $Z(\Phi_{10})$ | SX | $Z(\theta_{10})$ | SX | $Z(\lambda_{10})$ | | $Z(\Phi_{11})$ |

$$1Q1(\varphi) = R_z(-2\varphi) - X$$
$$1Q2(\varphi) = R_z(-\varphi) - SX - R_z(\varphi)$$

[QUANTUM CIRCUIT (AFTER TRANSFORMATION FOR
TRAPPED-ION QUANTUM DEVICE)]

32

| $1Q2(\Phi'_{00})$ | $1Q2(\theta'_{00})$ | $1Q1(\lambda'_{00})$ | $1Q1(0)$ | | $1Q2(\Phi'_{01})$ |

$MS(0,0)$

| $1Q2(\Phi'_{10})$ | $1Q2(\theta'_{10})$ | $1Q1(\lambda'_{10})$ | $1Q1(0)$ | | $1Q2(\Phi'_{11})$ |

$$\phi'_{ik} = -\phi_{ik}, \theta'_{ik} = -(\phi_{ik} + \theta_{ik}), \lambda'_{ik} = -\frac{\phi_{ik} + \theta_{ik} + \lambda_{ik}}{2}$$

FIG. 5

INCORPORATED INTO SUBSEQUENT GATE OPERATIONS

$$1Q2(\phi') - 1Q2(\theta') - R_z(\lambda')$$
$$= R_z(-\phi') - SX - R_z(\phi' - \theta') - SX - R_z(\theta' + \lambda')$$

$$\phi' = -\phi, \theta' = -(\phi + \theta), \lambda' = \phi + \theta + \lambda$$

FIG. 6

TERMINAL
DEVICE
401

TERMINAL
DEVICE
402

. . .

CLASSICAL
100  COMPUTER DEVICE

110

COMPUTATION
REQUEST
RECEIVING UNIT

120

QUANTUM
CIRCUIT
GENERATION
UNIT

130

QUANTUM
COMPUTATION
CONTROL UNIT

200

QUANTUM COMPUTER DEVICE

FIG. 7

START

GENERATE QUANTUM CIRCUIT  S101

TRANSFORMATION INTO
NATIVE GATES  S102

INSTRUCT QUANTUM
COMPUTER DEVICE TO
PERFORM QUANTUM
COMPUTATION  S103

ACQUIRE MEASUREMENT
RESULT  S104

END

# FIG. 8

```
        ╭─────────────────────╮
        │  TRANSFORMATION INTO │
        │     NATIVE GATES     │
        │       START          │
        ╰─────────────────────╯
                   │
                   ▼
    ┌─────────────────────────────┐        S201
    │  PERFORM TRANSFORMATION INTO │
    │     TWO-QUBIT GATE (Rxx)     │
    └─────────────────────────────┘
                   │
                   ▼
    ┌─────────────────────────────┐        S202
    │  COMBINE CONSEQUETIVE SINGLE-│
    │         QUBIT GATES          │
    └─────────────────────────────┘
                   │
                   ▼
    ┌─────────────────────────────┐        S203
    │  TRANSFORM COMBINED SINGLE-  │
    │  QUBIT GATE INTO ZXZXZ CIRCUIT│
    └─────────────────────────────┘
                   │
                   ▼
                 ( A )
```

# FIG. 9

[QUANTUM CIRCUIT
(AFTER TRANSFORMATION OF ARBITRARY
ROTATIONS INTO (ZXZXZ)]

$R_{XX}$ GATE

33

Z ROTATION GATE

$R_X(90)$=SX GATE

$R_X(90)$=SX GATE

[QUANTUM CIRCUIT
(AFTER TRANSFORMATION FOR
TRAPPED-ION QUANTUM DEVICE)]

MS GATE

34

FIG. 10

1Q2 GATE

EQUIVALENT
CIRCUIT

42

41

42a

42c

42d

$MS(\phi_0, \phi_1)$

$=$

$R_Z(-\phi_0)$

$MS(0,0)=R_{XX}(\pi/2)$

$R_Z(\phi_0)$

$R_Z(-\phi_1)$

$R_Z(\phi_1)$

42b

42e

FIG. 11

43 SUB-CIRCUIT

1Q2-1Q2-Z

Z-X-Z-X-Z

43a   43c   43d

$R_Z(\lambda'_0)$   $MS(0,0)=R_{XX}(\pi/2)$   $R_Z(\lambda_2)$

$R_Z(\lambda'_1)$   $R_Z(\lambda_3)$

43b   43e

43-1 SUB-CIRCUIT

43a   43c   43f   43g

$R_Z(\lambda'_0)$   $MS(0,0)=R_{XX}(\pi/2)$   $R_Z(-\lambda'_0)$   $R_Z(\lambda'_0+\lambda_2)$

$R_Z(\lambda'_1)$   $R_Z(-\lambda'_1)$   $R_Z(\lambda'_1+\lambda_3)$

43b   43h   43i

43-2 SUB-CIRCUIT

43j   43g

$MS(-\lambda_0,-\lambda_1)$   $R_Z(\lambda'_0+\lambda_2)$

$R_Z(\lambda'_1+\lambda_3)$

43i

# FIG. 12

44 SUB-CIRCUIT

1Q2-1Q2-Z

Z-X-Z-X-Z

44a

$R_z(\lambda'_0)$

44c

$R_z(\lambda_2)$

$R_z(\lambda'_1)$

44b

$R_z(\lambda_3)$

44d

44-1 SUB-CIRCUIT

44e

$R_z(\lambda'_0 + \lambda_2)$

$R_z(\lambda'_1 + \lambda_3)$

44f

FIG. 13

[QUANTUM CIRCUIT (AFTER TRANSFORMATION OF ARBITRARY ROTATIONS INTO ZXZXZ)]   50

[QUANTUM CIRCUIT (AFTER PARTIAL TRANSOFMRATION INTO NATIVE GATES)]   50a

$$\phi'_{i0} = -\phi_{i0}, \theta'_{i0} = -(\phi_{i0} + \theta_{i0}), \lambda'_{i0} = \phi_{i0} + \theta_{i0} + \lambda_{i0}$$

FIG. 14

[[QUANTUM CIRCUIT (AFTER TRANSOFMRATION INTO NATIVE GATES)]]

50b

$$\phi'_{ik} = -(\phi_{ik} + \lambda'_{ik-1}) = -(\phi_{ik} + \phi_{ik-1} + \theta_{ik-1} + \lambda_{ik-1})$$

$$\theta'_{ik} = -(\phi_{ik} + \lambda'_{ik-1} + \theta_{ik}) = -(\phi_{ik} + \phi_{ik-1} + \theta_{ik-1} + \lambda_{ik-1} + \theta_{ik})$$

$$\lambda'_{ik} = \phi_{ik} + \lambda'_{ik-1} + \theta_{ik} + \lambda_{ik} = \phi_{ik} + \phi_{ik-1} + \theta_{ik-1} + \lambda_{ik-1} + \theta_{ik} + \lambda_{ik}$$

INITIAL VALUES $(k = -1)$ $\phi_{ik} = \theta_{ik} = \lambda_{ik} = 0$

FIG. 15

[QUANTUM CIRCUIT (AFTER TRANSFORMATION
OF ARBITRARY ROTATIONS INTO ZXZXZ)]

FIG. 16

50b

[QUANTUM CIRCUIT (AFTER TRANSFORMATION INTO NATIVE GATES)]

| | | | | | | |
|---|---|---|---|---|---|---|
| 1Q2($\phi'_{0n-1}$) | 1Q2($\theta'_{0n-1}$) | | 1Q2($\phi'_{0n}$) | 1Q2($\theta'_{0n}$) | 1Q1($\lambda''_{0n}$) | 1Q1(0) |

MS
$(-\lambda'_{0n-1}, -\lambda'_{1n-1})$

...

| | | | | | | |
|---|---|---|---|---|---|---|
| 1Q2($\phi'_{1n-1}$) | 1Q2($\theta'_{1n-1}$) | | 1Q2($\phi'_{1n}$) | 1Q2($\theta'_{1n}$) | 1Q1($\lambda''_{1n}$) | 1Q1(0) |

| | | | | | | |
|---|---|---|---|---|---|---|
| 1Q2($\phi'_{2n-1}$) | 1Q2($\theta'_{2n-1}$) | | 1Q2($\phi'_{2n}$) | 1Q2($\theta'_{2n}$) | 1Q1($\lambda''_{2n}$) | 1Q1(0) |

$$\phi'_{in} = -(\phi_{in} + \lambda'_{in-1}) = -(\phi_{ik} + \phi_{in-1} + \theta_{in-1} + \lambda_{in-1})$$
$$\theta'_{in} = -(\phi_{in} + \lambda'_{in-1} + \theta_{in}) = -(\phi_{in} + \phi_{in-1} + \theta_{in-1} + \lambda_{in-1} + \theta_{in})$$
$$\lambda''_{in} = -(\phi_{in} + \lambda'_{in-1} + \theta_{in} + \lambda_{in})/2 = -(\phi_{in} + \phi_{in-1} + \theta_{in-1} + \lambda_{in-1} + \theta_{in} + \lambda_{in})/2$$

FIG. 17

FIG. 18

## INTERNATIONAL SEARCH REPORT

| International application No. |
|---|
| **PCT/JP2023/033716** |

| | |
|---|---|
| **A.** | **CLASSIFICATION OF SUBJECT MATTER** |

*G06N 10/40*(2022.01)i

FI: G06N10/40

According to International Patent Classification (IPC) or to both national classification and IPC

| | |
|---|---|
| **B.** | **FIELDS SEARCHED** |

Minimum documentation searched (classification system followed by classification symbols)

G06N10/00-10/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | US 2014/0280427 A1 (MICROSOFT CORPORATION) 18 September 2014 (2014-09-18) entire text, all drawings | 1-10 |
| A | US 2020/0219002 A1 (BULL SAS) 09 July 2020 (2020-07-09) entire text, all drawings | 1-10 |
| A | CHILDS, M. A. et al., Circuit Transformations for Quantum Architectures, arXiv.org [online], 06 September 2019, pp. 1-29, [retrieved on 06 November 2023], Internet <URL: https://arxiv.org/ftp/arxiv/papers/1902/1902.09102.pdf>, DOI: 10.48550/arXiv.1902.09102 entire text, all drawings | 1-10 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/033716**

| Patent document cited in search report | | | Publication date (day/month/year) | Patent family member(s) | | | Publication date (day/month/year) |
|---|---|---|---|---|---|---|---|
| US | 2014/0280427 | A1 | 18 September 2014 | WO | 2014/151571 | A2 | |
| | | | | entire text, all drawings | | | |
| US | 2020/0219002 | A1 | 09 July 2020 | EP | 3674995 | A1 | |
| | | | | entire text, all drawings | | | |
| | | | | FR | 3091388 | A1 | |

Form PCT/ISA/210 (patent family annex) (January 2015)

**REFERENCES CITED IN THE DESCRIPTION**

**Patent documents cited in the description**

- JP 2022180189 A
- WO 2021177031 A
- US 20200074035
- US 20200104747